Europäisches Patentamt

European Patent Office

Office européen des brevets

(11) Publication number: **0 386 379 B1**

# EUROPEAN PATENT SPECIFICATION

(45) Date of publication of patent specification: **03.08.94**   (51) Int. Cl.5: **C03C 17/34**

(21) Application number: **89400649.3**

(22) Date of filing: **08.03.89**

(54) **Article provided with a non-stick coating, with improved adhesion to the substrate and durability, its manufacturing process and composition used.**

(43) Date of publication of application:
**12.09.90 Bulletin 90/37**

(45) Publication of the grant of the patent:
**03.08.94 Bulletin 94/31**

(84) Designated Contracting States:
**ES FR IT**

(56) References cited:
**EP-A- 0 059 790
EP-A- 0 323 882
EP-A- 0 386 380
FR-A- 2 320 914
US-A- 3 558 345**

**IBM TECHNICAL DISCLOSURE BULLETIN, vol. 20, no. 12, May 1978, page 5233, NewYork, US; B.D. WASHO: "Adhesion of tetrafluorethylene to substrate"**

(73) Proprietor: **Corning Incorporated
Houghton Park
Corning New York 14831(US)**

(72) Inventor: **Carre, Alain Robert Emile
313 avenue Anne de Bretagne
F-77820 Le Chatelet en Brie(FR)**
Inventor: **Roger, Françoise Maris Michèle
49bis rue du Souvenir
F-77210 Avon(FR)**

(74) Representative: **Colas, Jean-Pierre et al
Cabinet de Boisse
37, avenue Franklin D. Roosevelt
F-75008 Paris (FR)**

Rank Xerox (UK) Business Services
(3.10/3.09/3.3.3)

## Description

The present invention sets forth an article provided with a non-stick coating whose adhesion to the aforesaid article and durability are improved, a manufacturing process for such an article, and a composition suitable to improve the adhesion of a non-stick coating to an article.

The non-stick coatings used to produce cookware to which food does not stick during cooking are usually based on fluorocarbon polymers (polyetrafluoroethylene (PTFE), FEP, etc...) or on silicones.

When the article to be coated is a metallic substrate, such as aluminum or cast iron, gritblasting with an abrasive is usually recommended to insure adhesion of the coating to the substrate.

When the substrate is glass or glass ceramic, gritblasting is not suitable, in particular for a PTFE coating. Because of the porosity of the coating, the polymer/substrate interface is, in use, rapidly exposed to water detergents and grease, so that the adhesion of the coating to the substrate, which is mainly a kind of anchoring, is not sufficient to avoid staining or delamination on the aforesaid interface. The damage is particularly visible when the substrate is a transparent glass, such as Pyrex® brand cookware.

In order to improve adhesion of the non-stick coating to the (glass) substrate of the article to be coated, CGW has proposed, in the US patent 3 558 345, to use aminoalkyltrialkoxysilanes as coupling agents applied on the substrate before application of the non-stick coating. Typically the glass substrate is dipped into a diluted solution of the silane coupling agent for sufficient time (5 min to 4 h approximately) so as to have hydrolysis of the alkoxy groups, then condensation of the resulting -OH groups with the silanol (= SiOH) groups existing at the glass surface (cf. E.P. PLUEDDEMAN, Silylated surfaces, edited by D.E. Leyden and W. Collins, Gordon and Breach Science Publishers, N.Y., 31, 1978). Besides, the aminoalkyl groups have a high (bonding) interaction with the organic coating. Nevertheless for the condensation reaction to develop sufficiently, it is necessary for the substrate surface to be exempt from grease or other organic pollutants. Consequently, the surface to be coated has to be thoroughly cleaned with a detergent or an organic solvent (alcohol, acetone), then dried, to insure that silanol groups are present on the aforesaid surface, which process is, on an industrial scale, a serious inconvenience. Moreover this process is valid only for glass substrates.

There is consequently a need for a process allowing a good adhesion between a non-stick coating and a substrate, and being simpler to operate.

The purpose of the present invention is to satisfy this need, as well as others in addition.

More precisely, the invention relates to a process to produce an article consisting of a substrate, whose surface has -OH groups, and at least one layer based on a non-stick polymer, covering at least partially the aforesaid surface, characterized by (A) applying, on that portion of the substrate surface to be coated, a polyamide-imide prepolymer and an organosilane having two types of functional groups, one of them being reactive with the -OH groups of the substrate surface, and the other type being reactive with the polyamide-imide prepolymer, said polyamide-imide prepolymer and silane being applied either as a mixture in one layer, or successively in two layers, first silane, then polyamideimide prepolymer ; (B) drying and converting the polyamide-imide prepolymer into a polyamide-imide solid film by heating at high enough temperature ; and then (C) applying the non-stick layer(s) with the proviso that no gristblasting is carried out on the surface to be coated before step (A).

The invention relates also to an article consisting of a substrate whose surface has -OH groups, and of at least one layer of a non-stick polymer coating at least partially said surface, said article characterized by the fact that it contains also, applied between said substrate and said non-stick polymer, a layer obtained by making (A) an organosilane with two types of functional groups, one of them being reactive with the -OH groups of the substrate surfaces, and the other type being reactive with the polyamide-imide prepolymer, react with (B) a polyamide-imide prepolymer precursor of polyamide-imide film, and with (C) -OH groups of the substrate surface, then drying and converting the polyamide-imide prepolymer into a polyamide-imide solid film by heating up to a high enough temperature, said substrate surface being not gritblasted.

The present invention finally sets forth a composition useful to improve the adhesion of a non-stick coating with a substrate, said composition characteristically consisting of a polyamide-imide prepolymer precusor of polyamide-imide film, and an organosilane with two types of functional groups, one of them being susceptible to react with the -OH groups of the substrate surface, and the other type being susceptible to react with the polyamide-imide prepolymer, said composition being free of any pigment.

Synthesis of polyamide-imide is described in the literature (see for example "HEAT-RESISTANT POLYMERS", J.P. CRITCHELY, G.J. KNIGHT and W.W. WRIGHT, Plenum Press, N.Y., 207, 1983).

Polyamide-imides of types 1 and 2 (PAI-1, PAI-2)

- according to the classification of the Recommendation LI of the Bundesgesundheitsamt issued as Communication 160 in the Bundesgesundheitsblatt Vol. 26, Nr. 7, July 1983, p 219-211 -

have been successfuly used, for example.

An example of a polyamide-imide prepolymer composition, commercially available is code 8470 A XYLAN® from Whitford Plastics Ltd (Brindley 86, Astmoor, Runcorn, Cheshire, WA71PF, GB) and Whitford Corporation (Box 507, West Chester Pa 19381, USA).

The organosilane to be used must have two types of functionnal groups. One of those types must be reactive with the -OH groups present at the surface of the substrate to be coated, and possibly belonging to silanol groups or to Me-OH groups where Me is a metal. An example of groups of this type is the hydroxy group. Nevertheless, since hydroxysilanes are not very stable, alkoxysilanes are prefered, and they have to be hydrolyzed into hydroxysilanes just when they are used or a short time before. The other type must be reactive with the polyamide-imide prepolymer. An example of such groups is the amino group.

Among the useful organosilanes are consequently the amino or polyamino-silanes. Among those, the prefered ones are, thus far, gamma-aminopropyltriethoxysilane, gamma-aminopropyltrimethoxysilane and N-(bêtaaminoethyl)-gamma-aminopropyltrimethoxysilane, which have furthermore the advantage of being approved by the U.S. F.D.A., which is important when the final articles are intended for cooking usage.

As a guidance, the silane amount can be 1 to 10% by volume of the total composition, preferably 1 to 5. As a variation, the silane and the polyamide-imide prepolymer can be applied successively on the substrate to be coated. The dry extract of the final composition including resin, is usually between 10 and 22% by volume.

Viscosity adjustment of the silylated polyamide-imide prepolymer is obtained by solvent dilution.

The polyamide-imide prepolymer and silane applied to the substrate are heated to an appropriate temperature (for example 100 to 225°C) during a few minutes for drying of the layer(s) and conversion of the polyamide-imide prepolymer into a polyamide-imide film. A thickness of a few micrometers (for example 5-20 $\mu$m) is sufficient for the coating of polyamide-imide modified by silane to fulfill the purpose of the invention.

On top of that, the non-stick coating composition can be applied, in conventional way, as one or several successive layers, according to the manufacturer's prescriptions. Examples of suitable coating compositions are those based on PTFE supplied by E.I. Du Pont de Nemours and Co, Wilmington, Delaware, USA, and the coating compositions based on silicones supplied by Dow Corning Co, Midland, Michigan, USA.

The silane provides a high degree of adhesion, chemical in nature, with the substrate because of the condensation reaction of the -OH groups coming from hydrolysis of the alkoxy groups of the silane, with the -OH groups of the substrate surface. On the other side the amino groups of the silane create chemical bonds with the polyamide-imide prepolymer and consequently with the final polyamide-imide film. Finally experiments have indicated that the non-stick coatings adhere very well to the polyamide-imide layer modified by silane.

The following non limitative examples are given to better illustrate the invention.

In these examples, the following tests have been used:

ADHESION TEST

Since the usual tests for coatings, such as the cross hatch test and the thumb nail test, are mainly qualitative, we have developed a test designed to quantify the adhesion of the non-stick coating with the substrate.

This test, called plough test, consists in measuring, with a dynamometer, the force F necessary to remove the coating from the substrate by means of a tungsten carbide blade (the plough share), 2.5 mm long, making a 45° angle with the substrate, and on which a load P of 6.5 newtons is applied. To measure the coating adhesion on a substrate, one measures first the friction force $F_F$ of the blade on a part of the substrate without non-stick coating, then one measures the force $F_T$ necessary to remove the non-stick coating from the substrate when the blade is moved perpendiculary to itself at a speed of 50 $\mu$m/s. The difference $F_T-F_F$ = F measures the adhesion between the non-stick coating and the substrate. The test is made at 25 ± 2°C and a relative humidity 50 ± 5%. An average F is calculated from 9 measurements on three samples 5.8 x 5.8 cm.

CHEMICAL DURABILITY ACCELERATED TESTS

A first test consists in soaking non-stick coated samples in a solution with 3% by weight of sodium carbonate at 95°C for the indicated time. After this soaking the adhesion force F is measured with the aforesaid adhesion test.

A second test, closer to real usage, consists in determining the number, N, of washes in a conventional dishwasher which the article can withstand before any damage appears, such as staining, delamination, peeling of the coating, etc...

THERMAL AGEING TEST

This test consists in heating non-stick coated samples in an oven at 200 or 250°C for 6 days, then submitting them to the plough test.

EXAMPLE 1

In this example, we compare the adhesion of a non-stick coating, about 35 $\mu$m thick, consisting of two layers of a PTFE composition applied by gun spraying (two coats system 458Z 62510/455Z 69801 supplied by E.I. Du Pont de Nemours and Co) on clean Pyrex® articles, without any pretreatment, with the adhesion on some Pyrex® articles previously coated with gamma-aminopropyltriethoxysilane (abrevation $\gamma$-APTES) at 1% v/v in 95% ethanol, and with the adhesion of some Pyrex® articles previously coated with a composition of polyamide-imide (PAI-1) resin chemical supplied under reference 8470 A XYLAN®), with 1% v/v of $\gamma$-APTES. The silane precoating has been applied by spraying on substrates preheated at 100°C in order to evaporate ethanol. The precoating consisting of the composition of polyamide-imide resin and $\gamma$-APTES has been sprayed on the glass, then treated at 100°C in order to convert the polyamide-imide resin into polyamide-imide film, which is the precoating in accordance with the invention.

The adhesion force (or ploughing force) F is measured on coated samples, before and after thermal ageing at 250°C, and after 1 h and 4 h of chemical ageing in the sodium carbonate solution. The results of said tests are collected in table I; the standard deviation $\sigma$ on the values of F in this example is 1.0 N.

4

TABLE I

| Treatment of the Pyrex® substrate | Ploughing force: F; standard deviation 1.0 N | | | |
|---|---|---|---|---|
| | Before ageing | After thermal ageing at 250°C | After chemical ageing | |
| | | | 1 h | 4 h |
| Nil | 4.2 | 5.6 | 6.0 | 0.0 |
| γ-APTES at 1% in ethanol at 95% | 5.4 | 5.7 | 7.3 | 5.5 |
| 8470 A XYLAN® + 1% of γ-APTES (along the invention) | 8.4 | 6.5 | 7.8 | 7.7 |

EXAMPLE 2

The same modus operandi as in example 1 is used except replacement of 1% v/v γ-APTES added to 8470 A XYLAN® by 5% v/v. The ploughing force (F, with σ = 1.0 N) reaches now more than 11.8 N before ageing, (instead of 5.0 N), 9.9 N after thermal ageing at 250°C, and 9.3 and 8.1 N after chemical ageing of 1 h and 4 h respectively.

EXAMPLE 3

In this example, we compare the adhesion of a non-stick coating, about 20 $\mu$m thick, consisting of a layer of silicon resins (supplied by Dow Corning Co under the codes Q1-2531 and 6-2230) applied by spraying, then cured for 20 min at 250°C on clean Pyrex® substrates, either without any pretreatment, or provided with a precoating of $\gamma$-APTES at 1% v/v applied either as a solution in ethanol at 95% sprayed on a substrate preheated at 100°C or as an aqueous solution sprayed on a substrate preheated at 200°C, or provided with a precoating similar to the precoating of example 2 dried at 100°C.

The adhesion force F is measured on the coated samples before and after thermal ageing at 200 and 250°C, and after 1/4 h, 1/2 h, 1 h, 2 h and 3 h of chemical ageing in a sodium carbonate solution. The results are collected in table II.

TABLE II

**Ploughing force: $F_0 = 1{,}0$ N**

| TREATMENT OF THE PYREX® SUBSTRATE | Before ageing | After thermal ageing | | After chemical ageing | | | | |
|---|---|---|---|---|---|---|---|---|
| | | 250°C | 250°C | 1/4 h | 1/2 h | 1h | 2h | 3 h |
| Nil | 1.9 | 1.7 | 1.1 fissur-ing | 2.1 | 2.3 | 2.4 | 3.0 | 2.2 |
| γ-APTES at 1% in ethanol at 95% T = 100°C | 2.8 | 2.2 | 2.0 | 2.9 | 2.7 | 3.2 | 4.6 | 2.6 |
| γ-APTES at 1% in water T = 200°C | 2.5 | 2.9 | 1.7 fissur-ing | 3.3 | 3.6 | 2.9 | 4.4 | 2.8 |
| 8470 A XYLAN® + 1% γ-APTES (along the invention) | 5.0 | 4.7 | 2.8 | 6.7 | 4.9 | 3.7 | 5.9 | 4.7 |

### EXAMPLE 4

The same modus operandi is used as in example 3, except for the thickness of the silicone non-stick coating, which is about 45 μm and for the concentration of silane in the polyamide-imide resin which is 5% v/v instead of 1%.

The results are given in table III hereafter.

## TABLE III

Ploughing force: F; σ = 2,0 N

| Treatment of the Pyrex® substrate | Before ageing | After thermal ageing at 200°C | After chemical ageing | |
|---|---|---|---|---|
| | | | 1 h | 4 h |
| Nil | 4.1 | 2.1 | 4.6 | 3.5 |
| γ-APTES at 1% in ethanol at 95% T = 100°C | 3.8 | 3.3 | 5.7 | 6.2 |
| 8470 A XYLAN® + 5% of γ-APTES (along the invention) | 9.8 | 8.0 | 8.2 | 7.8 |

EXAMPLE 5

The same procedure as in example 4 is used, except for the silane concentration in the 8470 A XYLAN® precoating, which is 2.5% v/v of γ-APTES instead of 5%.

8

The ploughing force (F, with $\sigma$ = 2.0 N) is here 8.9 N before ageing, 9.9 N after thermal ageing at 200°C, and 11.8 and 10.8 N after chemical ageing for 1 h and 4 h respectively.

EXAMPLE 6

The same procedure as in example 4 is used, except for the silane concentration in the 8470 A XYLAN® precoating which is 1% v/v of $\gamma$-APTES instead of 5%.

The ploughing force (F with $\sigma$ = 2.0 N) is here 8.1 N before ageing, 7.8 N after thermal ageing at 200°C, and 7.7 and 9.7 N after chemical ageing for 1 h and 2 h respectively.

EXAMPLE 7

In this example, we compare the adhesion of a non-stick coating, about 20 $\mu$m thick, made by gun spraying of a layer of 8830 XYLAN® (a non-stick coating composition based on PTFE supplied by Whitford Plastics Ltd) on Pyrex® glass substrates and curing of said coating at 390°C for 20 min, aforesaid substrates being either without any pretreatment, or provided with a precoating consisting in a composition of polyamide-imide (PAI-1) resin (code 8470 A XYLAN®) containing 3% v/v of $\gamma$-APTES according to the conventional modus operandi described in example 1.

The adhesion force F is measured on the samples before and after thermal ageing at 250°C, and after 1 h of chemical ageing. This results are collected in table IV.

TABLE IV

| Treatment of the Pyrex® substrate | Ploughing force: F;$_0$ = 1,5 N | | |
| --- | --- | --- | --- |
| | Before ageing | After thermal ageing at 250°C | After chemical ageing for 1 hour |
| Nil | 6.6 | 7.3 | 0 |
| 8570 A XYLAN® + 3% γ-APTES (along the invention) | 10.8 | 9.5 | 10.8 |

EXAMPLE 8

The same procedure as in example 2 is used, except that the second layer of the PTFE coating made from the composition code 455 Z 69801 from E.I. Du Pont de Nemours and Co, is replaced by the composition code 455 Z 69800 from the same company.

The adhesion of the non-stick coating on the substrates is tested with a conventional dishwasher, and evaluated by the number on washing cybles withstood by the coating before being damaged.

| Treatment of the Pyrex® glass substrate | Number of washing cycles, N |
|---|---|
| Nil | 10 |
| 8470 A XYLAN® + 5% γ-APTES (according to the invention) | > 169 |

## EXAMPLE 9

In this example we compare, with the cross hatch test and the thumb nail test the adhesion of non-stick coatings based on PTFE made from the compositions code 459 523 and 456 396 supplied by E.I. Du Pont de Nemours and C°, applied on Pyrex® glass cookware, said cookware being either without any precoating, or precoated with a composition of polyamide-imide resin (PAI-1) (code 8470 A XYLAN®) containing 5% v/v of N-(bêta-aminoethyl)-gamma-aminopropyltrimethoxysilane. The articles provided with this precoating successfully pass both tests after 1 h of chemical ageing. On the contrary the articles without any precoating fail, the PTFE coating being easily removed, after 1 h of chemical ageing, by the thumb nail.

## EXAMPLE 10

In this example we compare the adhesion of non-stick coatings based on PTFE made from compositions code 459 523 and 456 396 supplied by E.I. Du Pont de Nemours and Co on stainless steel substrates (reference Z 6 CN 18.09) previously degreased with 1.1.1-trichlorethane then dried at 350°C, said substrates being either without any precoating or precoated with a composition of polyamide-imide resin (PAI-1) (code 8470 A XYLAN®) containing 3% v/v of γ-APTES.

The samples without precoating fail the thumb nail test after 1 h of chemical ageing. The samples precoated according to the invention pass the test, even after 3 h of chemical ageing.

## EXAMPLE 11

A non-stick PYREX® bakeware is prepared by adding 4.5% in volume of γ-aminopropyltriethoxysilane in a composition of polyamide-imide of type 2 (PAI-2) from WHITFORD.

After application of this composition and drying (dried thickness ≃ 15 μm), the two coat non-stick coating, code 459 Z 67 303 and 456 Z 67 302, from DU PONT DE NEMOURS AND Co is sprayed on the precoated substrate. The thickness of these two layers is respectively 12 and 8 μm. The curing of the complete coating is achieved after 10 minutes at 400°C.

Adhesion at interfaces is evaluated by using conventional adherence tests (cross-hatch and thumb nail tests) is found very good and durable after thermal and chemical ageing (1 hour in carbonate solution).

The above examples clearly demonstrate that the present invention provides means to substantially improve adhesion and durability of non-stick coatings on a variety of substrates. Moreover the process disclosed in this invention is particularly suitable for application at an industrial scale.

Obviously the procedures described above are only examples, and they could be modified, in particular by substitution of technical equivalents without departing from the scope of the present invention.

## Claims

1. Process to produce an article consisting of a substrate, whose surface has -OH groups, and at least one layer based on a non-stick polymer, covering at least partially the aforesaid surface, characterized by (A) applying, on that portion of the substrate surface to be coated, a polyamide-imide prepolymer and an organosilane having two types of functional groups, one of them being reactive with the -OH groups of the substrate surface, and the other type being reactive with the polyamide-imide prepolymer, said polyamide-imide prepolymer and silane being applied either as a mixture in one layer, or successively in two layers, first silane, then polyamide-imide prepolymer ; (B) drying and converting the polyamide-imide prepolymer into a polyamide-imide solid film by heating at high enough temperature ; and then (C) applying the non-stick layer(s) with the proviso that no gritblasting is carried out on the surface to be coated before step (A).

2. Process according to claim 1, characterized by the fact that the functional groups susceptible to react with the -OH groups are either hydroxy groups, or alkoxy groups which will be hydrolyzed into hydroxy groups just when used.

3. Process according to claim 2, characterized by the fact that the functional groups susceptible to react with the polyamide-imide prepolymer are amino groups.

4. Process according to claims 1 to 3, characterized by the fact that the silane is an amino- or polyaminoalkoxysilane.

5. Process according to claim 4, characterized by the fact that the silane is either gamma-aminopropyltriethoxysilane, or gamma-aminopropyltrimethoxysilane, or N-(bêta-aminoethyl)-gamma-aminopropyltrimethoxysilane.

6. Process according to claim 5, characterized by the proportion of organosilane, being between 1 and 10% of the total volume of the layer(s) applied in step (A).

7. Process according to claim 6, characterized by the proportion of organosilane, being between 1 and 5% by volume.

8. Process according to any claim from 1 to 7, characterized by the fact that the non-stick coating is either a silicone or a fluorocarbon polymer.

9. Process according to any one of claims 1 to 8, characterized by the substrate consisting of glass, glass ceramic, ceramic, glazed metal or metal.

10. Article consisting of a substrate whose surface has -OH groups, and of at least one layer of a non-stick polymer coating at least partially said surface, said article characterized by the fact that it contains also, applied between said substrate and said non-stick polymer, a layer obtained by making (A) an organosilane with two types of functional groups, one of them being reactive with the -OH groups of the substrate surfaces, and the other type being reactive with the polyamide-imide prepolymer, react with (B) a polyamide-imide prepolymer precursor of polyamide-imide film, and with (C) -OH groups of the substrate surface, then drying and converting the polyamide-imide prepolymer into a polyamide-imide solid film by heating up to a high enough temperature, said substrate surface being not gritblasted.

11. Article according to claim 10, characterized by the fact that the silane is an amino- or polyaminoalkoxysilane.

12. Article according to claim 11, characterized by the fact that the silane is either gamma-aminopropyltriethoxysilane, or gamma-aminopropyltrimethoxysilane, or N-(bêta-aminoethyl)-gamma-aminopropyltrimethoxysilane.

13. Article according to any one of claims 10 to 12, characterized by the fact that the non-stick polymer is silicone or a fluorocarbon polymer.

14. Article according to any one of claims 10 to 13 characterized by the fact that it is cookware.

15. Composition suitable to operate in the process defined in claim 1, characterized by the fact that it consists of a polyamide-imide prepolymer precursor of a polyamide-imide film and an organosilane with two types of functional groups, one of them being reactive with the -OH groups of the substrate surface, and the other type being reactive with the polyamide-imide prepolymer, said composition being free of any pigment.

16. Composition according to claim 15, characterized by the fact that the silane is an amino- or polyaminoalkoxysilane.

17. Composition according to claim 16, characterized by the fact that the silane is either gamma-aminopropylethoxysilane, or gamma-aminopropyltrimethoxysilane, or N-(bêta-aminoethyl)-gamma-aminopropylmethoxysilane.

18. Composition according to any one of claims 15 to 17, characterized by the fact that it contains 1 to 10% silane by volume.

**Patentansprüche**

1. Verfahren zur Herstellung eines Gegenstandes, bestehend aus einem Substrat, dessen Oberfläche -OH-Gruppen hat, und wenigstens einer Schicht auf der Basis eines nichthaftfähigen Polymers, die wenigstens teilweise die genannte Oberfläche bedeckt, gekennzeichnet durch (A) Anwendung auf diesem Teil der zu beschichtenden Substrat-Oberfläche eines Polyamid-imid-Prepolymers und eines Organosilans, das zwei Arten funktioneller Gruppen hat, von denen eine mit den -OH-Gruppen der Substrat-Oberfläche reaktiv ist und die andere Art mit dem Polyamid-imid-Prepolymer reaktiv ist, wobei dieses Polyamid-imid-Prepolymer und Silan entweder als eine Mischung in einer Schicht oder nacheinander in zwei Schichten, zuerst Silan, dann Polyamid-imid-Prepolymer, aufgebracht werden, (B) Trocknen und Umwandeln des Polyamid-imid-Prepolymers in einen festen Polyamid-imid-Film durch Erwärmen bei ausreichend hoher Temperatur und dann (C) Aufbringen der nicht-haftfähigen Schicht(en) mit der Maßgabe, daß kein Sandstrahlverfahren auf der zu beschichtenden Oberfläche vor Stufe (A) durchgeführt wird.

2. Verfahren gemäß Anspruch 1, dadurch gekennzeichnet, daß die funktionellen Gruppen, die mit den -OH-Gruppen reagieren sollen, entweder Hydroxygruppen oder Alkoxygruppen sind, die zu Hydroxygruppen hydrolysiert werden, wenn sie verwendet werden.

3. Verfahren gemäß Anspruch 2, dadurch gekennzeichnet, daß die funktionellen Gruppen, die mit dem Polyamid-imid-Prepolymer reagieren sollen, Aminogruppen sind.

4. Verfahren gemäß Anspruch 1 bis 3, dadurch gekennzeichnet, daß das Silan ein Amino- oder Polyaminoalkoxysilan ist.

5. Verfahren gemäß Anspruch 4, dadurch gekennzeichnet, daß das Silan entweder $\gamma$-Aminopropyltriethoxysilan oder $\gamma$-Aminopropyltrimethoxysilan oder N-($\beta$-aminoethyl)-$\gamma$-aminopropyltrimethoxysilan ist.

6. Verfahren gemäß Anspruch 5, dadurch gekennzeichnet, daß der Anteil des Organosilans 1 bis 10 % des gesamten Volumens der in Stufe (A) aufgebrachten Schicht(en) beträgt.

7. Verfahren gemäß Anspruch 6, dadurch gekennzeichnet, daß der Anteil an Organosilan 1 bis 5 Vol.-% beträgt.

8. Verfahren gemäß irgendeinem der Ansprüche 1 bis 7, dadurch gekennzeichnet, daß die nicht-haftfähige Beschichtung entweder ein Silicon oder ein Fluorkohlenstoff-Polymer ist.

9. Verfahren gemäß irgendeinem der Ansprüche 1 bis 8, dadurch gekennzeichnet, daß das Substrat aus Glas, Glaskeramik, Keramik, glasiertem Metall oder Metall besteht.

10. Gegenstand, bestehend aus einem Substrat, dessen Oberfläche -OH-Gruppen hat, und wenigstens eine Schicht eines nicht-haftfähigen Polymers aufweist, die wenigstens teilweise diese Oberfläche bedeckt, wobei der Gegenstand dadurch gekennzeichnet ist, daß er auch zwischen dem Substrat und dem nicht-haftfähigen Polymer eine Schicht aufgebracht enthält, die erhalten wird durch Herstellung (A) eines Organosilans mit zwei Arten funktioneller Gruppen, von denen eine mit den -OH-Gruppen der Substrat-Oberflächen reaktiv ist und die andere Art mit dem Polyamid-imid-Prepolymer reaktiv ist, Reagieren mit (B) einem Polyamid-imid-Prepolymer-Vorläufer eines Polyamid-imid-Films und mit (C) -OH-Gruppen der Substrat-Oberfläche, dann Trocknen und Umwandeln des Polyamid-imid-Prepolymers in einen festen Polyamid-imid-Film durch Erwärmen auf eine ausreichend hohe Temperatur, wobei das Substrat keinem Sandstrahlverfahren unterworfen wird.

**11.** Gegenstand gemäß Anspruch 10, dadurch gekennzeichnet, daß daß das Silan ein Amino- oder Polyaminoalkoxysilan ist.

**12.** Gegenstand gemäß Anspruch 11, dadurch gekennzeichnet, daß daß das Silan entweder $\gamma$-Aminopropyl-triethoxysilan, $\gamma$-Aminopropyltrimethoxysilan oder N-($\beta$-aminoethyl)-$\gamma$-aminopropyltrimethoxysilan ist.

**13.** Gegenstand gemäß Anspruch 11, dadurch gekennzeichnet, daß das das nicht-haftfähige Polymer ein Silicon oder ein Fluorkohlenstoff-Polymer ist.

**14.** Gegenstand gemäß irgendeinem der Ansprüche 10 bis 13, dadurch gekennzeichnet, daß er Küchengeschirr ist.

**15.** Zusammensetzung, die geeignet ist in dem gemäß Anspruch 1 definierten Verfahren wirksam zu sein, dadurch gekennzeichnet, daß sie aus einem Polyamid-imid-Prepolymer-Vorläufer eines Polyamid-imid-Films und einem Organosilan mit zwei Arten von funktionellen Gruppen, von denen eine mit den -OH-Gruppen der Substrat-Oberfläche reaktiv ist, und die andere mit dem Polyamid-imid-Prepolymer reaktiv ist, besteht, wobei die Zusammensetzung frei von irgendeinem Pigment ist.

**16.** Zusammensetzung gemäß Anspruch 15, dadurch gekennzeichnet, daß das Silan ein Amino- oder Polyaminoalkoxysilan ist.

**17.** Zusammensetzung gemäß Anspruch 16, dadurch gekennzeichnet, daß das Silan entweder $\gamma$-Aminopro-pyltriethoxysilan, $\gamma$-Aminopropyltrimethoxysilan oder N-($\beta$-aminoethyl)-$\gamma$-aminopropyltrimethoxysilan ist.

**18.** Zusammensetzung gemäß Anspruch 17, dadurch gekennzeichnet, daß es 1 bis 10 Vol.-% Silan enthält.

**Revendications**

**1.** Procédé de production d'un article constitué d'un substrat, dont la surface comporte des groupes -OH, et d'au moins une couche à base d'un polymère antiadhérent couvrant au moins partiellement la surface susdite, caractérisé par (A) l'application, sur la partie à revêtir de la surface du substrat, d'un prépolymère polyamide-imide et d'un organosilane ayant deux types de groupes fonctionnels, l'un d'eux étant réactif avec les groupes -OH de la surface du substrat, et l'autre type étant réactif avec le prépolymère polyamide-imide, ledit prépolymère polyamide-imide et ledit silane étant appliqués soit sous forme d'un mélange en une seule couche, soit successivement en deux couches avec d'abord le silane, puis le prépolymère polyamide-imide ; (B) le séchage et la transformation du prépolymère polyamide-imide en un film solide de polyamide-imide par chauffage à une température suffisamment élevée ; puis (C) l'application de la ou des couches antiadhérentes, avec la condition qu'aucun décapage par projection d'abrasif ne soit effectué sur la surface à revêtir avant l'étape (A).

**2.** Procédé selon la revendication 1, caractérisé par le fait que les groupes fonctionnels capables de réagir avec les groupes -OH sont, soit des groupes hydroxyle, soit des groupes alcoxy qui seront hydrolysés en groupes hydroxyle juste au moment de l'emploi.

**3.** Procédé selon la revendication 2, caractérisé par le fait que les groupes fonctionnels capables de réagir avec le prépolymère polyamide-imide sont des groupes amino.

**4.** Procédé selon les revendications 1 à 3, caractérisé par le fait que le silane est un amino- ou polyamino-alcoxysilane.

**5.** Procédé selon la revendication 4, caractérisé par le fait que le silane est le gamma-aminopropyltriéthoxysilane ou le gamma-aminopropyltriméthoxysilane ou le N-(bêta-aminoéthyl)-gamma-aminopropyltriméthoxysilane.

**6.** Procédé selon la revendication 5, caractérisé par le fait que la proportion d'organosilane est comprise entre 1 et 10 % du volume total de la ou des couches appliquées dans l'étape (A).

**7.** Procédé selon la revendication 6, caractérisé par le fait que la proportion d'organosilane est comprise entre 1 et 5 % en volume.

**8.** Procédé selon l'une quelconque des revendications 1 à 7, caractérisé par le fait que le revêtement antiadhérent est une silicone ou un polymère fluorocarboné.

**9.** Procédé selon l'une quelconque des revendications 1 à 8, caractérisé par le fait que le substrat est constitué de verre, vitrocéramique, céramique, métal émaillé ou métal.

**10.** Article constitué d'un substrat dont la surface comporte des groupes -OH et d'au moins une couche d'un polymère antiadhérent revêtant au moins partiellement ladite surface, ledit article étant caractérisé par le fait qu'il contient également, appliquée entre ledit substrat et ledit polymère antiadhérent, une couche obtenue en faisant réagir (A) un organosilane ayant deux types de groupes fonctionnels, l'un d'eux étant réactif avec les groupes -OH de la surface du substrat, et l'autre type étant réactif avec le prépolymère polyamide-imide, avec (B) un prépolymère polyamide-imide précurseur de film de polyamide-imide, et avec (C) les groupes -OH de la surface du substrat, puis en séchant et transformant le prépolymère polyamide-imide en un film solide de polyamide-imide par chauffage jusqu'à une température suffisamment élevée, ladite surface du substrat n'étant pas décapée par projection d'abrasif.

**11.** Article selon la revendication 10, caractérisé par le fait que le silane est un amino- ou polyamino-alcoxysilane.

**12.** Article selon la revendication 11, caractérisé par le fait que le silane est le gamma-aminopropyltriéthoxysilane ou le gamma-aminopropyltriméthoxysilane ou le N-(bêta-aminoéthyl)-gamma-aminopropyltriméthoxysilane.

**13.** Article selon l'une quelconque des revendications 10 à 12, caractérisé par le fait que le polymère antiadhérent est une silicone ou un polymère fluorocarboné.

**14.** Article selon l'une quelconque des revendications 10 à 13, caractérisé par le fait qu'il s'agit d'un ustensile de cuisine.

**15.** Composition convenant pour être utilisée dans le procédé défini dans la revendication 1, caractérisée par le fait qu'elle consiste en un prépolymère polyamide-imide précurseur d'un film de polyamide-imide et en un organosilane ayant deux types de groupes fonctionnels, l'un d'eux étant réactif avec les groupes -OH de la surface du substrat, et l'autre type étant réactif avec le prépolymère polyamide-imide, ladite composition étant exempte de tout pigment.

**16.** Composition selon la revendication 15, caractérisée par le fait que le silane est un amino- ou polyamino-alcoxysilane.

**17.** Composition selon la revendication 16, caractérisée par le fait que le silane est le gamma-aminopropyléthoxysilane ou le gamma-aminopropyltriméthoxysilane ou le N-(bêta-aminoéthyl)-gamma-aminopropylméthoxysilane.

**18.** Composition selon l'une quelconque des revendications 15 à 17, caractérisée par le fait qu'elle contient 1 à 10 % en volume de silane.